# EUROPEAN PATENT APPLICATION

(11) **EP 1 345 107 A2**
(43) Date of publication of application: **17.09.2003**
(21) Application number: 02013715.4
(22) Date of filing: 20.06.2002
(51) Int. Cl.: G06F 1/16

(54) **Portable information terminal**

(30) Priority: 26.06.2001 JP 2001192493
(71) Applicant: Pioneer Corporation, Meguro-ku, Tokyo (JP); Pioneer Design Corporation, Meguro-ku, Tokyo (JP)
(72) Inventor: Hirayama, Naofumi, Tokyo 153-8654 (JP); Suma, Daisuke, Tokyo 153-8654 (JP); Tomono, Mizuki, Tokyo 153-8654 (JP); Funayama, Tatsufumi, Tokyo 153-8654 (JP)
(74) Representative: Popp, Eugen, Dr.

(57) **Abstract**

A portable information terminal includes a main terminal 2 having a RAM 24 and a communication circuit 27, and a secondary terminal 3 having a communication circuit 38, a RAM 36 and a CPU 30. The communication circuit 38 of the secondary terminal 3 and the communication circuit 27 of the primary terminal 2 are communicated under control of the CPU 30, for transmission of application programs and data stored in the RAM 24 of the primary terminal 2, to the secondary terminal 3. Then the transmitted application program and data are stored in the RAM 36 of the secondary terminal 3 to form functions to be installed in the secondary terminal 3. The secondary terminal 3 is communicated with the communication circuit 27 of the primary terminal 2 to transmit data accumulated on the secondary terminal 3, to the primary terminal 2. Then the transmitted data is stored in the RAM 24 of the primary terminal 2.

## Description

### BACKGROUND OF THE INVENTION

### FIELD OF THE INVENTION

This invention relates to an improved information terminal, which is designed for increased multifunction capabilities and for enhanced security when the information terminal is carried around.

The present application claims priority from Japanese Application No. 2001-192493, the disclosure of which is incorporated herein by reference for all purposes.

### DESCRIPTION OF THE RELATED ART

In recent years, various types of portable information terminals, e.g., a notebook-type personal computer, a PDA, and a portable telephone, have become rapidly and widely available. Along with this, a variety of functions installed on portable information terminals for information processing have become rapidly enhanced.

However, as such portable information terminals progress in multifunction design and multifunction capabilities for increasing the number of available functions, it becomes practicable to accumulate various types of information including personal information on a single portable information terminal. These circumstances raise a serious problem of ensuring security when a high volume of accumulated information is carried around.

Further, since a user requires different functions on the portable information terminal at different times, it is inefficient that the user carries around the portable information terminal installed with all functions at all times. In addition, the portable information terminal becomes complicated in procedure for launching and operating each function, leading to a problem of causing the so-called "digital divide" for the technologically uneducated.

### SUMMARY OF THE INVENTION

The present invention has been made to solve the problems associated with security when information increasingly accumulated on a portable information terminal is carried around, also with progress in multifunction capabilities designed to increase the number of available functions on portable information terminals, as described above.

It is therefore an object of the present invention to provide a portable information terminal strengthened in security when information accumulated on the portable information terminal is carried around, and capable of having multifunction capabilities with improvement of effective usability and manipulation.

According to a first feature of the present invention to attain the above object, there is provided a portable information terminal comprising: a primary terminal having a memory member for storing application programs and data, and a communication member for transmitting and receiving the application program and the data; and a secondary terminal having a communication member for transmitting and receiving the application program and the data to and from the communication member of the primary terminal, a memory member for storing the application programs and the data transmitted to and received from the primary terminal, and a control member for controlling operation of the communication member and memory member of the secondary terminal. The communication member of the secondary terminal and the communication member of the primary terminal are communicated under control of said control member for transmission of the application programs and data, which are retained in the memory member of the primary terminal, to the secondary terminal, and then the transmitted application programs and data are stored in the memory member of the secondary terminal to form functions installed on the secondary terminal. Also, the communication member of the secondary terminal and the communication member of the primary terminal are communicated under the control of the control member for transmission of the data, accumulated on the secondary terminal as a result of execution of the application program installed in the secondary terminal, to the primary terminal, and then the transmitted data is stored in the memory member of the primary terminal.

In the first feature, the portable information terminal stores the application programs for forming a variety of functions to be installed in the secondary terminal and various kinds of data processed in each of the application programs, on the memory member of the primary terminal.

Through the communication based on, for example, Bluetooth technology or the like between the communication members of the primary and secondary terminals, the application programs and various kinds of data to be used in the secondary terminal are transmitted from the primary terminal to the secondary terminal and stored in the memory member of the secondary terminal in accordance with the user's purpose of using the secondary terminal as occasion requires.

For example, when the secondary terminal alone is carried around or when the primary terminal is accommodated in a bag or the like and the secondary terminal is separated from the primary terminal and is solely operated, the application program and data required on the secondary terminal is copied from the primary terminal to the secondary terminal for use whenever necessary.

The application program and data stored in the memory member of the secondary terminal are replaced with another application program and data stored on the primary terminal in accordance with each user's purpose of using the secondary terminal as occasion requires, thereby customizing the function installed in the secondary terminal.

In the secondary terminal, the accumulating data inputted during the use of the installed application program by the user, e.g., program data or music data downloaded from the Internet or the like by the secondary terminal and image data photographed and recorded by a digital camera, is appropriately transmitted to the primary terminal to be stored in the memory member of the primary terminal.

As described above, with the first feature, even if the memory member of the secondary terminal has a low storage capacity, the low storage capacity can be effectively used. In addition, the storing of the application programs and data on the primary terminal leads to solution of the security problems, for example, loss of the secondary terminal during transit and loss of data due to a failure occurred in the program.

As compared with the case in which data accumulated on the secondary terminal is retained on a server for the Internet, improvement of the usability and handlability of the data and enhancement of security for secret information can be achieved because the data is retained on the primary terminal paired with the secondary terminal.

Further, the secondary terminal can be installed with only the required function/functions at each time when the secondary terminal is carried around. Thus, the secondary terminal is avoided from complication in manipulation resulting from installation of needless functions, leading to prevention occurrence of the so-called "digital divide" problem.

To attain the aforementioned object, a second feature of a portable information terminal according to the present invention is, in addition to the configuration of the first feature, that the primary terminal further includes a control member for execution of the application programs stored in the memory member of the primary terminal.

With the second feature, the providing of the control member in the primary terminal allows the primary terminal to serve a function of storing the application programs and data for use in the secondary terminal, and to itself launch the application program to execute a required function, and further to synchronize with the secondary terminal for execution of a variety of functions.

To attain the aforementioned object, a third feature of a portable information terminal according to the present invention is, in addition to the configuration of the first feature, that the communication established between the communication member of the primary terminal and the communication member of the secondary terminal is based on Bluetooth technology.

With the third feature, Bluetooth communication, which is performed between the communication member of the primary terminal and the communication member of the secondary terminal, provides smooth transmission/receipt of the application programs and data between the primary terminal and the secondary terminal.

To attain the aforementioned object, a fourth feature of portable information terminal according to the present invention is, in addition to the configuration of the first feature, that the memory member of the primary terminal stores an application program for a navigation system and map-image data, and the secondary terminal includes a global positioning system, and the application program for the navigation system and map-image data for an area freely selected as required are transmitted from the primary terminal to the secondary terminal and stored in the memory member of the secondary terminal.

With the fourth feature, the secondary terminal can serves as the navigation system to guide the user to the destination by copying, from the primary terminal, the navigation application program stored in the memory member, and a piece of map-image data on an area including a user's destination which is selected, as required, from the map-image data stored in the memory medium.

Thus, only when the navigation system is required, the secondary terminal is installed with the application program for the navigation system and a piece of map-image data on an area including a user's destination. Therefore, it is possible to avoid other functions from being complicated in manipulation by installing the navigation application program and the map-image data even when the navigation system is not required.

These and other objects and features of the present invention will become more apparent from the following detailed description with reference to the accompanying drawings.

### BRIEF DESCRIPTION OF THE DRAWINGS

Fig. 1 is a perspective view illustrating an example of a portable information terminal according to a preferred embodiment of the present invention.

Fig. 2 is a front view illustrating a primary terminal of the portable information terminal in the example in Fig. 1.

Fig. 3 is a rear view illustrating the primary terminal in Fig. 2.

Fig. 4 is a front view illustrating a secondary terminal in an open position when a display part is fully opened in response to a secondary operation part in accordance with the embodiment.

Fig. 5 is a rear view of the secondary terminal.

Fig. 6 is a block diagram illustrating the circuit configuration of the primary terminal in accordance with the embodiment.

Fig. 7 is a block diagram illustrating the circuit configuration of the secondary terminal in accordance with the embodiment.

Fig. 8 is a front view illustrating an example of usage patterns of the portable information terminal in combination mode in accordance with the embodiment.

Fig. 9 is a front view illustrating an example of usage patterns of the secondary terminal according to the embodiment.

Fig. 10 is a front view illustrating another example of the usage patterns of the secondary terminal according to the embodiment.

Fig. 11A is a rear view illustrating a usage pattern of the secondary terminal with a CCD camera according to the embodiment.

Fig. 11B is a front view illustrating the usage pattern of Fig. 11A.

Fig. 12 is a front view illustrating an example of usage patterns of the portable information terminal as a navigation system according to the embodiment.

Fig. 13 is a diagram for explaining how to use the portable information terminal as the navigation system relating to Fig. 12.

### DETAILED DESCRIPTION OF THE PREFERRED EMBODIMENT

A preferred embodiment according to the present invention will be described hereinafter in detail with reference to the accompanying drawings.

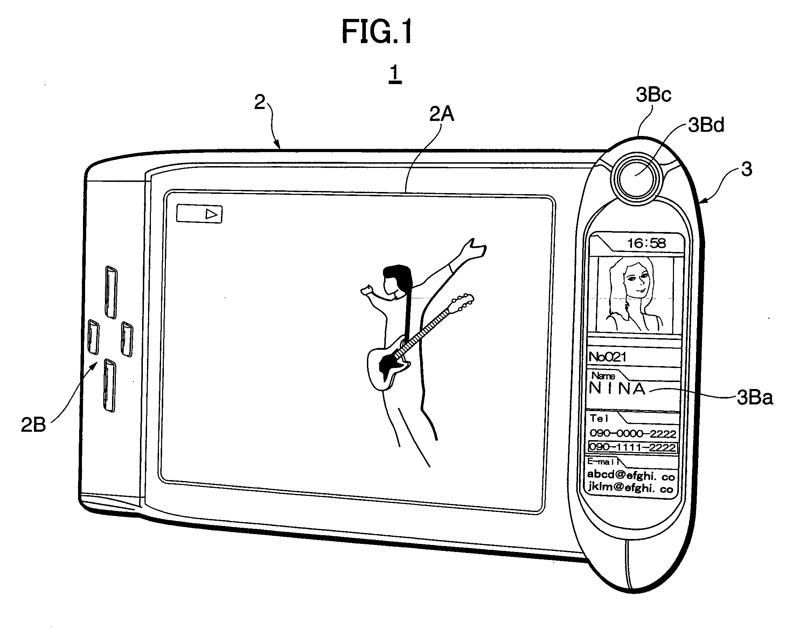

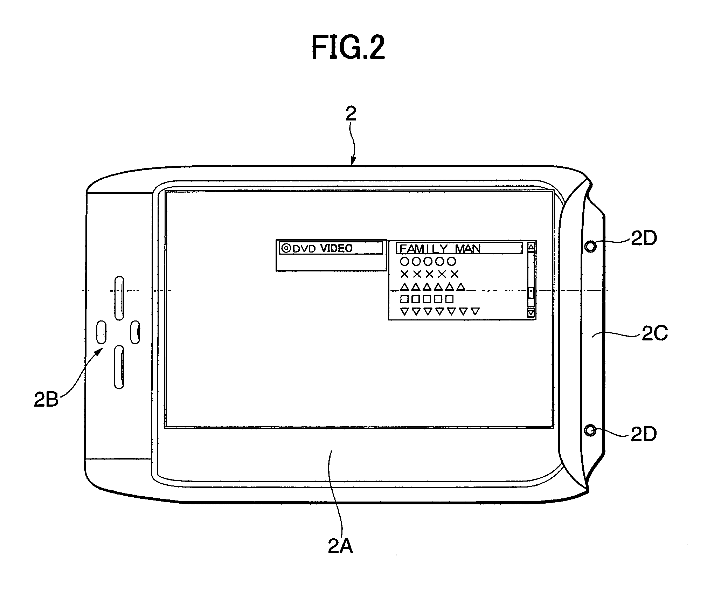

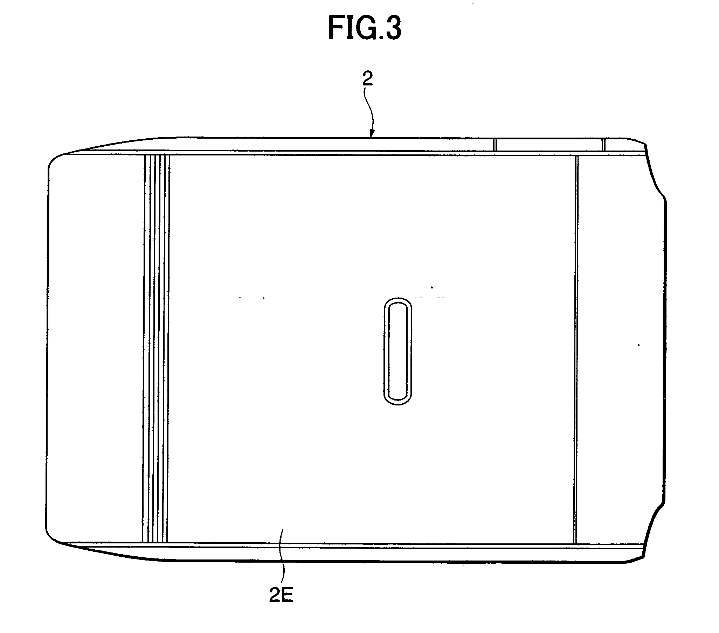

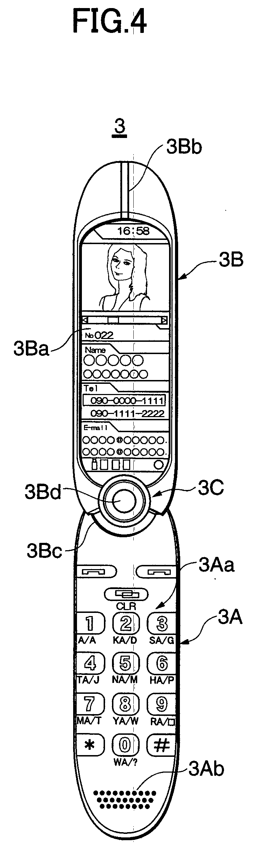

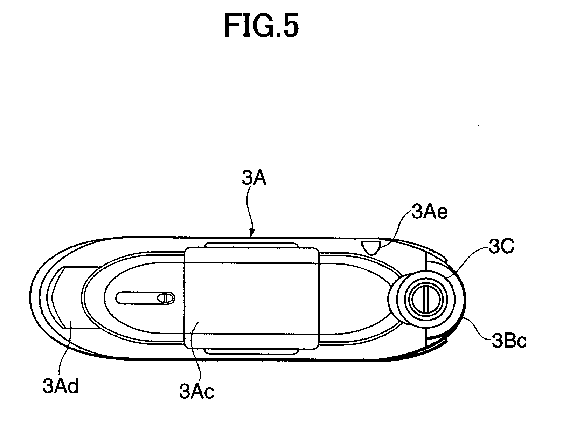

Fig. 1 is a perspective view illustrating an example of portable information terminal according to a preferred embodiment of the present invention. Fig. 2 is a front view illustrating a primary terminal forming part of the portable information terminal in Fig. 1. Fig. 3 is a rear view illustrating the primary terminal. Fig. 4 is a front view illustrating a secondary terminal forming part of the portable information terminal in one of its usage patterns. Fig. 5 is a rear view of the secondary terminal.

In Fig. 1, the portable information terminal 1 is constructed of two parts, a primary terminal 2 and a secondary terminal 3 separably combined with the primary terminal 2.

As illustrated in Fig. 2, the primary terminal 2 has a substantially quadrangular plate-shaped outside shape, on the front surface of which a display panel 2A having a size occupying most of a central area of the front surface is located, and four operation keys 2B are arranged on a frame situated on the left of the display panel 2A.

The primary terminal 2 has on the right edge thereof a mounting base 2C which is formed into a recess shape corresponding to a shape of the left edge of the secondary terminal 3 to fit with the secondary terminal 3 for combined use. The mounting base 2C incorporates a pair of combination detection sensors 2D for detecting that the secondary terminal 3 is attached in place.

As illustrated in Fig. 3, on the back of the primary terminal 2, a DVD drive 2E is mounted, together with a card interface, speaker, and headphone terminal which are not shown.

As illustrated in Fig. 4, the secondary terminal 3 includes an elongated and approximately oval plate-shaped secondary manipulation part 3A, and a plate-shaped display part 3B having approximately the same outside shape as that of the secondary manipulation part 3A. The display part 3B has a bottom end coupled rotatably to a top end of the secondary manipulation part 3A through a rotation supporting element 3C.

With this coupling, as described later, the display part 3B moves rotatavely in relation to the secondary manipulation part 3A from a closed position in which the display part 3B and the secondary manipulation part 3A are superimposed on each other, to a first open position in which the part 3B is opened to form a substantially right angle with the part 3A, or a second open position in which the part 3B is opened an angle of 180 degrees from the part 3A.

The secondary manipulation part 3A of the secondary terminal 3 includes a variety of operation keys 3Aa with a ten-key pad required for the origination and reception of telephone calls which are arranged over the front surface thereof, and a microphone 3Ab in a lower portion of the front surface thereof (the portion opposite to the portion supported by the rotational supporting element 3C).

A card interface 3Ac is mounted in a central portion on the back of the secondary manipulation part 3A, as illustrated in Fig 5. A CCD camera 3Ad is mounted in a lower portion of the back of the part 3A (the portion opposite to the portion supported by the rotational supporting element 3C) so as to slide between the position in which the camera 3Ad is housed in a casing of the secondary manipulation part 3A and the position in which the camera 3Ad is projected outward from the casing of the part 3A along the axis of the part 3A.

A headphone terminal 3Ae is also mounted on a left side of the back of the secondary manipulation part 3A when viewed from the back thereof.

The display part 3B of the secondary terminal 3 includes on the front thereof a display panel 3Ba having a size occupying most of a central portion of the part 3B, and a speaker 3Bb at a top end thereof.

The display part 3B further includes a jog dial 3Bc and a joystick 3Bd at the bottom end thereof (the portion supported by the rotational supporting element 3C). The jog dial 3Bc has an outer edge which protrudes and is visible from the bottom end of the display part 3B, and is placed concentrically with the rotational supporting element 3C and rotatably in both directions. The joystick 3Bd is provided on the same axis as that of the rotational supporting element 3C.

The rotational supporting element 3C of the secondary terminal 3 includes a rotational position detection sensor, described later, for detecting in which position of the aforementioned three positions, the closed position, first open position and second open position, the display part 3B is situated in relation to the secondary manipulation part 3A.

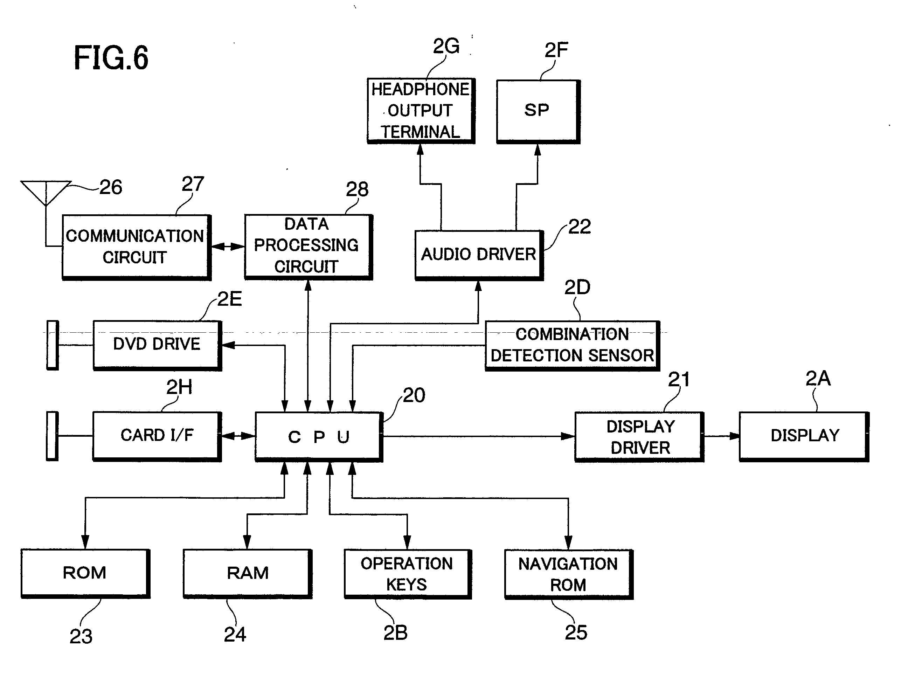

Fig. 6 is a block diagram illustrating an example of the configuration of a control section incorporated in the primary terminal 2 of the portable information terminal 1.

Referring to Fig. 6, a CPU 20 is connected through a display driver 21 to the display panel 2A, and through an audio driver 22 to a speaker 2F and a headphone terminal 2G. The CPU 20 is further connected to: the combination detection sensors 2D; a DVD driver 2E for loading a DVD recording medium such as a DVD-R, DVD-RW, DVD-ROM or DVD-RAM (an 8-cm DVD-R or an 8-cm DVD-RW in the example); a card interface 2H for loading a memory card such as a SmartMedia, compact flash, memory stick or multimedia card; a ROM 23 for storing driver software programs for driving the devices connected to the CPU 20, and the like; a RAM 24 for storing data; the operation keys 2B; and a navigation ROM 25 for storing an application program for a navigation system.

The CPU 20 is further connected to an antenna 26, incorporated inside the casing of the primary terminal 2, through a data processing circuit 28 and a communication circuit 27. The data processing circuit 28 acts as a clock control for various signals transmitted from and received by the communication circuit 27, and serves as an interface of the CPU.

In the control section of the primary terminal 2 of the portable information terminal 1, the antenna 26 provides for communication, based on Bluetooth technology or the like, between the primary terminal 2 and the secondary terminal 3 for the mutual transmission and reception of data or programs and of signals for controlling each other. The CPU 20 exercises control over various controls: for transmitting various kinds of data accumulated in the RAM 24 and various programs such as JAVA applet and the like from the antenna 26 to the secondary terminal 3; for writing the data transmitted from the secondary terminal 3 through the antenna 26, on the RAM 24, on a DVD recording medium loaded in the DVD driver 2E, or on a memory card loaded in the card interface 2H; for mutual remote control between the CPU 20 and the secondary terminal 3 via the antenna 26 executed under various programs installed in the secondary terminal 3; and the like.

The CPU 20 further exercises control over operational controls for various functions installed in the primary terminal 2, for example, the launching of an application program stored in the RAM 24, a DVD recording medium loaded in the DVD driver 2E or a memory card loaded in the card interface 2H on the basis of an actuating signal inputted through the manipulation of the operation keys 2B; the displaying of a video or an image on the display panel 2A on the basis of the data stored in those recording mediums; the outputting of audio to the speaker 2F or a headphone connected to the headphone terminal 2G; and the executing of an application program for navigation recorded in the navigation ROM 25; and the like.

The CPU 20 also exercises control over a systematic sharing of operation between the primary terminal 2 and the secondary terminal 3, as described later, when the secondary terminal 3 is attached to the primary terminal 2 and the CPU 20 receives from the combination detection sensor pairs 2D a detection signal representing the attachment of the secondary terminal 3.

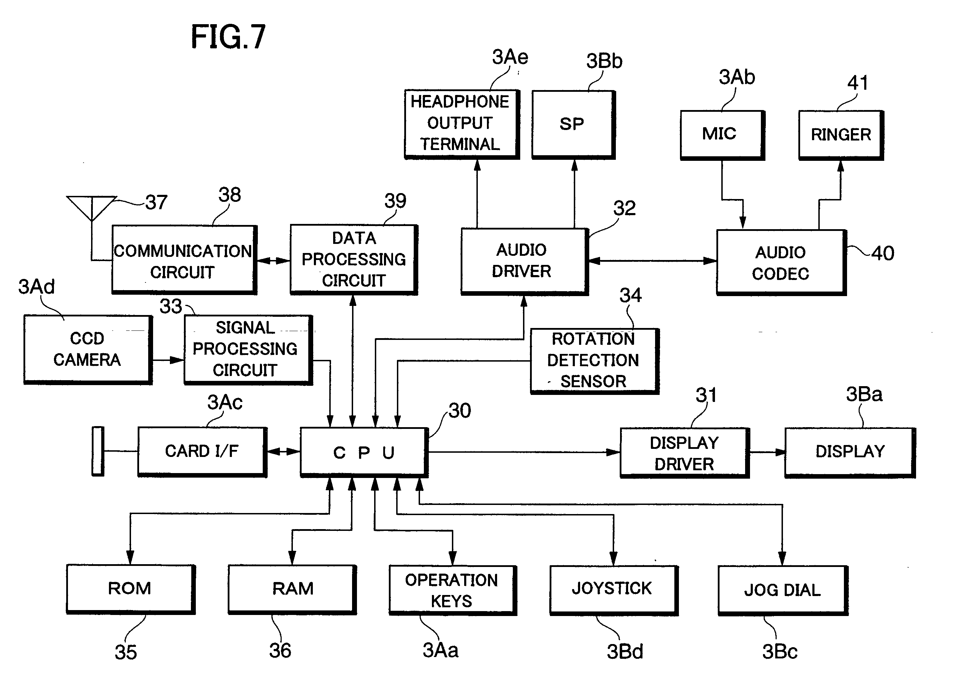

Fig. 7 is a block diagram illustrating an example of the configuration of a control section incorporated in the secondary terminal 3 of the portable information terminal 1.

Referring to Fig. 7, a CPU 30 is connected through a display driver 31 to the display panel 3Ba, and through an audio driver 32 to the speaker 3Bb and the headphone terminal 3Ae, and also through a signal processing circuit 33 to the CCD camera 3Ad. The CPU 30 is further connected to a rotational position detection sensor 34 of the display part 3B; a card interface 3Ac for loading a memory card such as a SmartMedia, compact flash, memory stick, and multimedia card; a ROM 35 for storing driver software programs for driving the devices connected to the CPU 30, and the like; a RAM 36 for storing application programs and data; the operation keys 3Aa; the joystick 3Bd; and the jog dial 3Bc.

The CPU 30 is further connected to an antenna 37, incorporated inside the casing of the secondary terminal 3, through a data processing circuit 39 and a communication circuit 38. The data processing circuit 39 acts as a clock control for various signals transmitted from and received by the communication circuit 38 and serves as an interface of the CPU.

The audio driver 32 is connected through an audio codec 40 to the microphone 3Ab and a ringer 41.

In the control section of the secondary terminal 3 of the portable information terminal 1, the antenna 37 provides for communication, based on Bluetooth technology or the like, between the primary terminal 2 and the secondary terminal 3 for the mutual transmission and reception of data or programs and of signals for controlling each other, and also provides for connection to computer networks such as the Internet or the like. The CPU 30 exercises control over a variety of controls: for transmitting various kinds of data and various programs such as JAVA applet and the like accumulated in the RAM 36, from the antenna 37 to the primary terminal 2; for writing the data or programs transmitted from the primary terminal 2 through the antenna 37 on the RAM 36 or on a memory card loaded in the card interface 3Ac; for mutual remote control between the CPU 30 and the primary terminal 2 via the antenna 37 executed under various programs installed in the secondary terminal 3; for connecting to the computer networks; and the like.

The CPU 30 further exercises control over operational controls for various functions installed in the secondary terminal 3, for example, execution of an application program stored in the RAM 36 or in a memory card loaded in the card interface 3Ac on the basis of an actuating signal inputted through the manipulation of the operation keys 3Aa, jog dial 3Bc or joystick 3Bd; the displaying of a video or an image on the display panel 3Ba on the basis of the data stored on those recording mediums; outputting of audio to the speaker 3Bb or headphones connected to the headphone terminal 3Ae; the inputting of audio from the microphone 3Ab through an audio codec 40 and the audio driver 32; the outputting of audio to the ringer 41 through the audio driver 32 and the audio codec 40; the photographing of the CCD camera 3Ad; and the storing of data of the image photographed by the CCD camera 3Ad in the RAM 36 or a memory card loaded in the card interface 3Ac.

The CPU 30 also controls the switching to operational mode corresponding to each position of the display part 3B as described later, on the basis of a detection signal representing a rotational position of the display part 3B of the secondary terminal 3 in relation to the secondary manipulation part 3A which is detected by the rotational position detection sensor 34.

Next, the operation of the aforementioned portable information terminal 1 will be described for each usage pattern of the primary terminal 2 and the secondary terminal 3.

Functions installed in the primary terminal 2 are based on the application programs stored in the ROM 23, RAM 24 and navigation ROM 25, and the application programs stored on a DVD recording medium loaded in the DVD driver 2E or a memory card loaded in the card interface 2H. The user therefore can customize the configuration of functions installed in the portable information terminal 1 to make the functional configuration desirable by rewriting the application program in the RAM 24 or changing the DVD recording mediums or the memory cards.

Likewise, functions installed in the secondary terminal 3 are based on the application programs stored in the ROM 35 and RAM 36, and the application programs stored on a memory card loaded in the card interface 3Ac. The user can customize the configuration of functions installed in the portable information terminal 1 to make the functional configuration desirable by rewriting the application program in the RAM 36 or changing the memory cards.

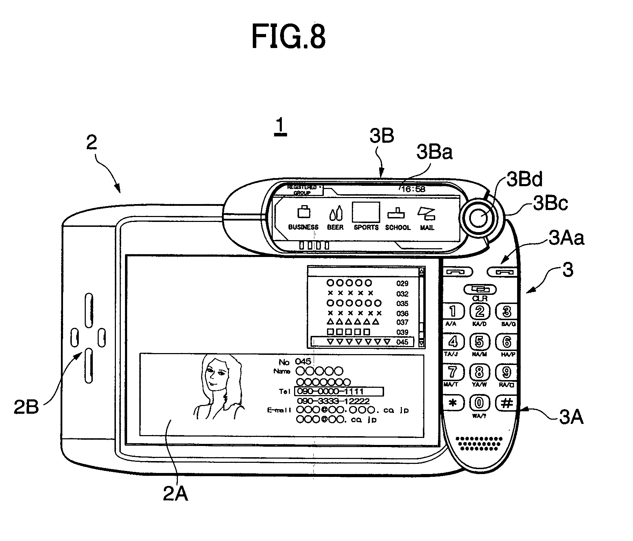

First, with reference to Fig. 1 and Fig. 8, a description will be given for usage patterns in combination mode in which the secondary terminal 3 is placed on the mounting base 2C of the primary terminal 2 for combination with the primary terminal 2.

Fig. 1 illustrates the usage pattern when the display part 3B of the secondary terminal 3 combined with the primary terminal 2 is in the closed position (i.e. the display part 3B and the secondary manipulation part 3A are superimposed on each other).

Fig. 8 illustrates the usage pattern when the display part 3B of the secondary terminal 3 is in the first open position in relation to the secondary manipulation part 3A (i.e. the display part 3B is moved to form a right angle with the secondary manipulation part 3A), and is set in parallel to the top edge of the display 2A.

In the above usage pattern in combination, the combination detection sensor pairs 2D mounted on the mounting base 2C detects that the secondary terminal 3 is fitted into the mounting base 2C, and then sends a resulting combination detection signal representing the combination of the secondary terminal 3 with the CPU 20, and thus the primary terminal 2 recognizes the combination of the secondary terminal 3.

The combination between the primary terminal 2 and the secondary terminal 3 is secured by means of an engagement of an engaging element, provided in the mounting base 2C, with the secondary terminal 3 or of magnetic attraction between the secondary terminal 3 and the mounting base 2C.

Upon the detection of the combination with the secondary terminal 3, the CPU 20 switches to combination mode, and a Bluetooth communication is established between the antenna 26 of the primary terminal 2 and the antenna 37 of the secondary terminal 3 to conduct remote control between the CPU 20 and the CPU 30 of the secondary terminal 3, thereby enabling the user to operate the secondary terminal 3 from the operation keys 2B of the primary terminal 2, and to operate the primary terminal 2 from the operation keys 3Aa, jog dial 3Bc or joystick 3Bd of the secondary terminal 3.

Thus, it is possible for a variety of application programs installed in the primary terminal 2 and secondary terminal 3 to implement the so-called "multi-play" capabilities established by means of the systematic link between the displays and operation sections, such as the operation keys, of both primary and secondary terminals 2 and 3, resulting in allowing the portable information terminal 1 to fully function as a mobile computer.

With the "multi-play" capability, the portable information terminal 1 can execute a variety of operations, for example: the terminal 1 is connected to the Internet by using a connecting function of the secondary terminal 3 and displays the Web page on the larger-size display panel 2A of the primary terminal 2; and the terminal 1 displays data of addresses registered in the secondary terminal 3 or data of an image photographed by the CCD camera 3Ad of the terminal 3, on the display 2A of the primary terminal 2 for editing; or the like.

In combination mode when the primary terminal 2 and secondary terminal 3 are combined, the display 2A and the display 3Ba form a double window. Through the use of the double window, for example, the display 3Ba of the secondary terminal 3 having a screen smaller in area than that of the display 2A of the primary terminal 2 can be used as an auxiliary window such as a display window for displaying a list of folders in the upper hierarchy, as a character window for displaying a character set to allow the user to choose a symbol or the like required for creating the document on the display 2A, a guide window for displaying a key guide and the like, and the like. Thus, with the double window, the display space of the display 2A of the primary terminal 2 is smaller than that of the display of a notebook-type personal computer, but can be effectively used, leading to the creation of a smooth and mobile computing.

Fig. 8 illustrates another example of the usage patterns of the portable information terminal 1 serving as mobile computing due to the double window. When the display part 3B of the secondary terminal 3 is in the first open position in relation to the secondary manipulation part 3A (i.e. the display part 3B is opened to form a right angle with the secondary manipulation part 3A) and the display 3Ba is laid over and in parallel to the top edge of the display 2A, the portable information terminal 1 can display icons indicating kinds of databases or a variety of toolbars on the display 3Ba, to provide an operational screen equivalent to that of a general personal computer.

In this first open position, the operation keys 3Aa arranged on the secondary manipulation part 3A of the secondary terminal 3 are on view and available for use. Hence, the secondary manipulation part 3A is used as a keyboard and the operation keys 2B of the primary terminal 2 are used as cursor keys, and also the jog dial 3Bc and the joystick 3Bd of the secondary terminal is used on behalf of a mouse, thereby allowing the portable information computer 1 to serve as a mobile computer in a usage pattern similar to that of a notebook-type personal computer.

As described above, when the display part 3B of the secondary terminal 3 is opened or closed in relation to the secondary manipulation part 3A to change the usage patterns of the portable information terminal 1, the rotational position detection sensor 34 (see Fig. 7) detects the position of the display part 3B of the secondary terminal 3 in relation to the secondary manipulation part 3A, and applies a detected rotational position detection signal to the CPU 30. Then, the CPU 30 transmits the detected signal to the CPU 20 of the primary terminal 2 by way of the Bluetooth communication, and then the primary terminal 2 and the secondary terminal 3 are automatically switched into the mode corresponding to the usage pattern in each rotational position.

Next, a description will be given of a usage pattern when the combined primary terminal 2 and secondary terminal 3 are separated to be used individually.

Fig. 2 illustrates an example of usage patterns when the primary terminal 2 is used alone.

The primary terminal 2 serves as a DVD player when a DVD software is mounted on the DVD drive 2E provided on the back of the primary terminal 2 (see Fig. 3). In this case, the operation keys 2B are respectively allocated the functions of "play", "stop", "fast forward" and "fast backward", for example.

The primary terminal 2 can be used in various patterns, for example, as a television receiver when a memory card having a TV receiving capability is loaded in the card interface 2H, and as an image display if a certain memory card having a required capability is loaded.

Each of Figs. 4, 9, 10, 11A and 11B illustrates an example of usage patterns when the secondary terminal 3 is used alone.

Fig. 4 illustrates a usage pattern when the display part 3B of the secondary terminal 3 is in the second open position in relation to the secondary manipulation part 3A (i.e. the display part 3B is opened 180 degrees from the secondary manipulation part 3A).

In the second open position, the secondary terminal 3 has the maximum distance between the microphone 3Ab incorporated in the bottom end of the secondary manipulation part 3A and the speaker 3Bb incorporated in the top end of the display part 3B, and the operation keys 3Aa of the secondary manipulation part 3A are on view and available for use. Accordingly, the second open position allows the secondary terminal 3 to be used as a speech communication device such as a portable telephone or the like.

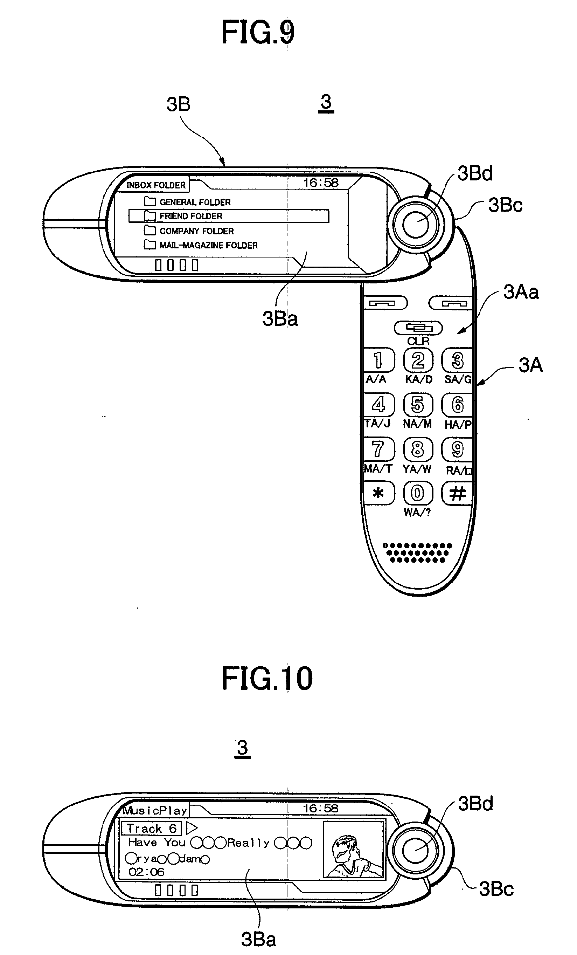

Fig. 9 illustrates an example of the usage patterns when the display part 3B of the secondary terminal 3 is in the first open position in relation to the secondary manipulation part 3A (i.e. the display part 3B is opened to form a right angle with the secondary manipulation part 3A).

In this first open position, the secondary terminal 3 can be used on the basis of the function corresponding to, for example, transmission/receipt mode for an electronic mail in which the built-in communication circuit 37 (see Fig. 7) establishes connection with the Internet; remote-control mode for remotely controlling a domestic appliance or the like through the Bluetooth communication; or credit-payment mode for paying at a convenience store, vending machine, ticket machine or the like.

Fig. 10 illustrates an example of the usage patterns when the display part 3B of the secondary terminal 3 is in the closed position relative to the secondary manipulation part 3A (i.e. the display part 3B and the secondary manipulation part 3A are superimposed on each other).

In the usage pattern in the closed position, the secondary terminal 3 is used as a music player as shown in Fig. 10 by way of example. If the user connects headphones to the headphone terminal 3Ae, he/she can enjoy listening to music on the basis of MPEG4 or the like.

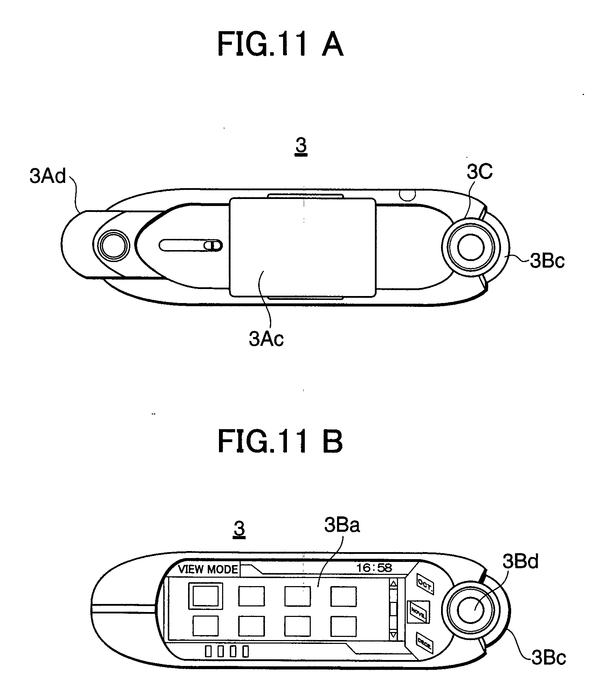

Figs. 11A and 11B illustrate another example of the usage patterns when the display part 3B of the secondary terminal 3 is in the closed position relative to the secondary manipulation part 3A.

As illustrated in Fig. 11A, the secondary terminal 3 in the usage pattern can is used as a digital camera when the CCD camera 3Ad mounted on the back of the secondary terminal 3 is slid out from the casing to set a lens in a correct position for exposure.

In this use, the CPU 30 determines from a detection signal sent from a sensor (not shown) that the CCD camera 3Ad has been slid out from the casing, and automatically switches into camera mode.

As shown in Fig. 11B, then, thumbnail images of the images photographed by the CCD camera 3Ad are displayed on the display 3Ba of the display part 3B to allow the user to check the photographed images.

In each of the usage patterns of the portable information terminal as described above, the application programs for forming a variety of functions installed in the secondary terminal 3 and a various kinds of data handled in the individual application programs are retained in the RAM 24 of the primary terminal 2, a DVD recording medium loaded on the DVD drive 2E, or a memory card loaded on the card interface 2H.

Through the Bluetooth communication between the communication circuit 27 of the primary terminal 2 and the communication circuit 38 of the secondary terminal 3, the application programs and a various kinds of data used in the secondary terminal 3 are copied from the primary terminal 3 into the RAM 36 of the secondary terminal 3 or a memory card loaded in the card interface 3Ac in accordance with user's purpose of using the secondary terminal 3 as occasion requires.

For example, when the secondary terminal 3 separated from the primary terminal 2 is solely carried around or when the primary terminal 2 is accommodated in a bag and the secondary terminal 3 separated from the primary terminal 2 is solely operated, a required application program and data are copied from the primary terminal 2 to the secondary terminal 3 for use. Then, as occasion requires, the application program and data are replaced with a required application program and data, thereby customizing the functions installed in the secondary terminal 3.

In the secondary terminal 3, the accumulating data during the execution of the installed application program, e.g., program data or music data downloaded from the Internet or the like by the secondary terminal 3, image data photographed and recorded by a CCD camera 3Ad, or the like is appropriately transmitted to the primary terminal 2 through the Bluetooth communication, and then stored in the RAM 24 of the primary terminal 2, a DVD recording medium loaded in the DVD drive 2E or a memory card loaded in the card interface 2H.

As a result, the storage capacity of the secondary terminal 3 lower than that of the primary terminal 2 can be effectively used. In addition, the storing of the programs and data in the primary terminal 2 leads to solution of the security problems, e.g., loss of the secondary terminal 3 during transit and loss of data due to a failure occurred in the program.

There is a possible way of retaining the data accumulated on the secondary terminal 3 on a server for the Internet in order to enhance security. However, the way of retaining the programs and data in the primary terminal 2 which is paired with the secondary terminal 3 has advantages in the usability and handlability as well as security of confidential information over the above way of retaining the data on the server.

Further, it is possible to install the secondary terminal 3 with only the differently required functions at different times when the secondary terminal 3 is carried around. Thus, the secondary terminal 3 is avoided from being uselessly having multifunction capabilities and therefore being complicated in manipulation, leading to prevention occurrence of the so-called "digital divide" problem.

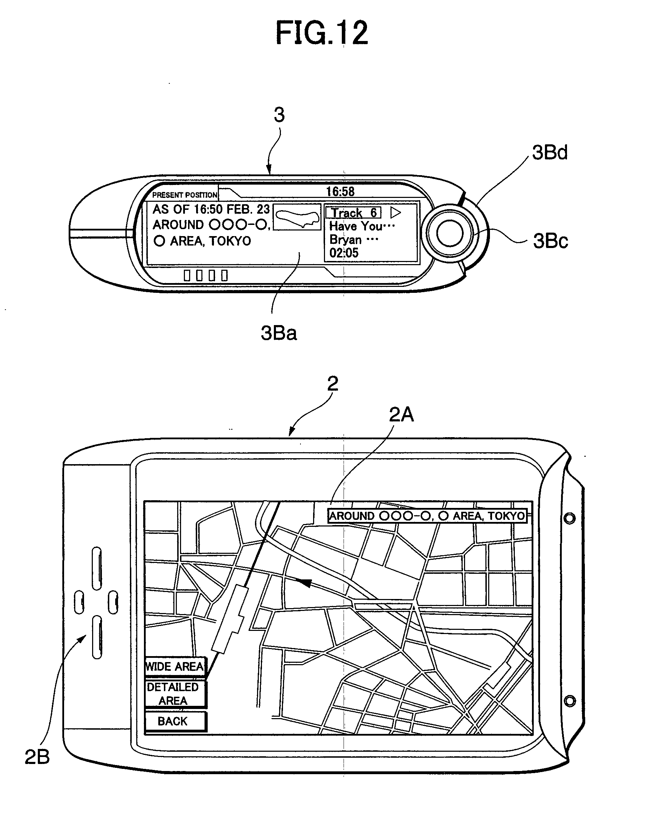

Fig. 12 illustrates an example of usage patterns when the portable information terminal 1 serves as a handy navigation system by means of the systematic link between the primary terminal 2 and the secondary terminal 3.

The usage pattern in Fig. 12 can be performed either when the primary terminal 2 and secondary terminal 3 are combined together as shown in Fig.1 or when they are separated from each other as shown in Fig. 12.

Specifically, in the primary terminal 2, a DVD recording map images is loaded in the DVD drive 2E, and the navigation application program stored in the navigation ROM 25 is activated to display the navigation map image on the display 2A.

A present position of the terminal is detected by a communication function provided in the secondary terminal 3. For example, a memory card having a GPS function is loaded in the card interface 3Ac of the secondary terminal 3 and the GPS function is used for detecting the present position.

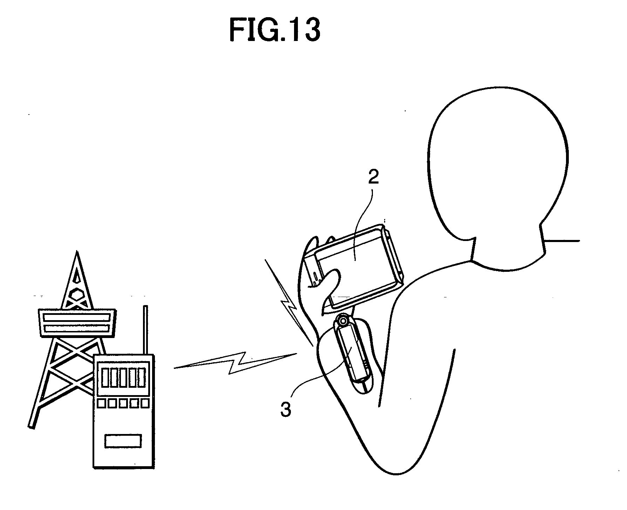

Alternatively, as illustrated in Fig. 13, the PHS (personal handyphone system) communication function or the Bluetooth communication function incorporated in the secondary terminal 3 establishes communication with PHS relay antennas or communication with sales-managing communication antennas attached to vending machines or the like, to detect the present position, and the positional information detected by either the PHS or the Bluetooth communication function is transmitted to the primary terminal 2 by way of the Bluetooth communication. The primary terminal 2 displays a mark indicating the present position on the map data image displayed on the display 2A for guidance to the destination.

If the navigation application program retained on the primary terminal 2, and a piece of map-image data on an area including a user's destination which is selected from the map-image data recorded on a DVD recording medium loaded in the primary terminal 2, are copied to the secondary terminal 3, even when the secondary terminal 3 is separated from the primary terminal 2 and is carried around alone, the secondary terminal 3 can serves on its own as the navigation system to guide the user to the destination.

In this case, only when the navigation system is required, the secondary terminal 3 is installed with the navigation application program and a piece of the map-image data on an area including a user's destination. Therefore, it is possible to avoid manipulation of other functions from being complicated by installing the navigation application program and the map-image data although the navigation system is not required.

The terms and description used herein are set forth by way of illustration only and are not meant as limitations. Those skilled in the art will recognize that numerous variations are possible within the spirit and scope of the invention as defined in the following claims.

## Claims

1. A portable information terminal **characterised by**:
a primary terminal (2) having a memory member (23, 24, 25) for storing application programs and data, and a communication member (27) for transmitting and receiving the application program and the data; and
a secondary terminal (3) having a communication member (38) for transmitting and receiving the application program and the data to and from said communication member (27) of said primary terminal (2), a memory member (36) for storing the application programs and the data transmitted to and received from said primary terminal (2), and a control member (30) for controlling operation of the communication member (38) and the memory member (36), and
in that said communication member (38) of said secondary terminal (3) and said communication member (27) of said primary terminal (2) are communicated under control of said control member (30) for transmission of the application programs and data retained in said memory member (23, 24, 25) of said primary terminal (2) to said secondary terminal (3), and then the transmitted application programs and data are stored in said memory member (36) of the secondary terminal (3) to form functions installed on the secondary terminal (3), and
in that said communication member (38) of said secondary terminal (3) and said communication member (27) of said primary terminal (2) are communicated under control of said control member (30) for transmission of the data accumulated on said secondary terminal (3) as a result of execution of the application program installed on the secondary terminal (3), to said primary terminal (2), and then the transmitted data is stored in said memory member (24) of the primary terminal (2).

2. A portable information terminal according to claim 1, wherein said primary terminal (2) further includes a control member (20) for execution of the application programs stored in said memory member (23, 24, 25) of the primary terminal (2).

3. A portable information terminal according to claim 1, wherein the communication established between said communication member (27) of said primary terminal (2) and said communication member (38) of said secondary terminal (3) is based on Bluetooth technology.

4. A portable information terminal according to claim 1, wherein said memory member (25) of said primary terminal (2) stores an application program for a navigation system and map-image data, and said secondary terminal (3) includes a global positioning system, and the application program for the navigation system and map-image data for a area freely selected as required are transmitted from the primary terminal (2) to the secondary terminal (3) and stored in said memory member (36) of the secondary terminal (3).
